# EUROPEAN PATENT SPECIFICATION

(11) **EP 2 071 439 B1**
(45) Date of publication and mention of the grant of the patent: **13.07.2016**
(21) Application number: 08253978.4
(22) Date of filing: 11.12.2008
(51) Int. Cl.: G06F 3/045

(54) **Touch panel and display device using the same**
Berührungsbildschirm und diesen verwendende Anzeigevorrichtung
Panneau tactile et dispositif d'affichage l'utilisant

(30) Priority: 14.12.2007 CN 200710125115
(43) Date of publication of application: 17.06.2009
(73) Proprietor: Tsing Hua University, Haidian District Beijing (CN); Hon Hai Precision Industry Co., Ltd., Tu-cheng City, Taipei Hsien (TW)
(72) Inventor: Jiang, Kai-Li, Haidian District Beijing City (CN); Liu, Liang, Haidian District Beijing City (CN); Fan, Shou-Shan, Haidian District Beijing City (CN)
(74) Representative: Huang, Chongguang

(56) References cited:
- EP-A1- 1 739 692
- US-A- 4 933 660
- US-A1- 2006 274 048
- US-A1- 2007 115 413

## Description

### 1. Technical Field

The present disclosure relates to touch panels and, particularly, to a carbon nanotube based touch panel and a display device using the same.

### 2. Discussion of Related Art

Following the advancement in recent years of various electronic apparatuses, such as mobile phones, car navigation systems and the like, toward high performance and diversification, there has been continuous growth in the number of electronic apparatuses equipped with optically transparent touch panels at the front of their respective display devices (e.g., liquid crystal panels). A user of any such electronic apparatus operates it by pressing or touching the touch panel with a finger, a pen, stylus, or another like tool while visually observing the display device through the touch panel. Therefore, a demand exists for touch panels that provide superior visibility and reliable operation.

Up to the present time, different types of touch panels, including resistance, capacitance, infrared, and surface sound-wave types have been developed. Due to their higher accuracy and low-cost of production, resistance-type touch panels have been widely used.

A related art resistance-type touch panel includes an upper substrate, a lower substrate, and a plurality of dot spacers. The upper substrate includes an optically transparent upper conductive layer formed on a lower surface thereof. The lower substrate includes an optically transparent lower conductive layer formed on an upper surface thereof, and two pairs of electrodes connected to the optically transparent lower conductive layer at four edges along the X and Y directions respectively. The plurality of dot spacers is formed between the optically transparent upper conductive layer and the optically transparent lower conductive layer. The upper substrate is a transparent and flexible film/plate. The lower substrate is a transparent and rigid plate made of glass. The optically transparent upper conductive layer and the optically transparent lower conductive layer are formed of conductive indium tin oxide (ITO). The two pairs of electrodes are formed by silver paste layers.

Voltages are separately applied by an electronic circuit to the two pairs of electrodes. In operation, an upper surface of the upper substrate is pressed with a finger, a pen or the like tool, and visual observation of a screen on the display device provided on a back side of the touch panel is allowed. This causes the upper substrate to be deformed, and the upper conductive layer thus comes in contact with the lower conductive layer at the position where pressing occurs. Voltages between the position where pressing occurs and the electrodes are changed. Thus, the deformed position can be detected by the electronic circuit.

However, the ITO layer (i.e., the optically transparent conductive layer) is generally formed by means of ion-beam sputtering, and the method is relatively complicated. Furthermore, the ITO layer has poor wearability/durability, low chemical endurance, and uneven resistance in an entire area of the panel. Additionally, the ITO layer has relatively low transparency in humid environments. All the above-mentioned problems of the ITO layer makes for a touch panel with relatively low sensitivity, accuracy, and brightness. Further, touch panels including carbon nanotubes have been described in US20060274048 A1 and EP1739692 A1. A touch panel including four electrodes electrically connected to a same conductive layer has been described in US4933660 A. Furthermore, a liquid crystal display including two alignment films has been described in US20070115413 A1. However, there are still problems remained by these prior references.

What is needed, therefore, is to provide a durable touch panel and a display device using the same having high sensitivity, accuracy, and brightness to overcome the aforementioned shortcomings.

### SUMMARY

In one embodiment, a touch panel is provided as defined by the appended claim 1. In another embodiment, a display device comprising the described touch panel is provided as defined by the appended claim 13.

Other advantages and novel features of the present touch panel and the display device using the same will become more apparent from the following detailed description of present embodiments when taken in conjunction with the accompanying drawing

### BRIEF DESCRIPTION OF THE DRAWINGS

Many aspects of the present touch panel and the display device using the same can be better understood with reference to the following drawings. The components in the drawings are not necessarily to scale, the emphasis instead being placed upon clearly illustrating the principles of the present touch panel and the display device using the same.
FIG. 1 is a schematic view of a partially assembled touch panel in accordance with a present embodiment.
FIG. 2 is a cross-sectional view of the touch panel of FIG. 1.
FIG. 3 shows a Scanning Electron Microscope (SEM) image of a drawn carbon nanotube film used in the touch panel of FIG. 1.
FIG. 4 is a structural schematic of a carbon nanotube segment in the drawn carbon nanotube film of FIG. 3.
FIG. 5 shows a Scanning Electron Microscope (SEM) image of a flocculated carbon nanotube film used in the touch panel of FIG. 1.
FIG. 6 is a Scanning Electron Microscope (SEM) image of a pressed carbon nanotube film including a plurality of carbon nanotubes arranged in different directions, used in the touch panel of FIG. 1.
FIG. 7 is a Scanning Electron Microscope (SEM) image of a pressed carbon nanotube film including a plurality of carbon nanotubes arranged in same direction, used in the touch panel of FIG. 1.
FIG. 8 is a Scanning Electron Microscope (SEM) image of a non-twisted carbon nanotube wire, used in the touch panel of FIG. 1.
FIG. 9 is a Scanning Electron Microscope (SEM) image of a twisted carbon nanotube wire, used in the touch panel of FIG. 1.
FIG. 10 is a schematic assembled cross-sectional view of the touch panel of the present embodiment used with a display element of a display device.

Corresponding reference characters indicate corresponding parts throughout the several views. The exemplifications set out herein illustrate at least one embodiment of the present touch panel and the display device, in at least one form, and such exemplifications are not to be construed as limiting the scope of the invention in any manner.

### DETAILED DESCRIPTION OF EXEMPLARY EMBODIMENTS

Reference will now be made to the drawings to describe, in detail, embodiments of the present touch panel and the display device using the same.

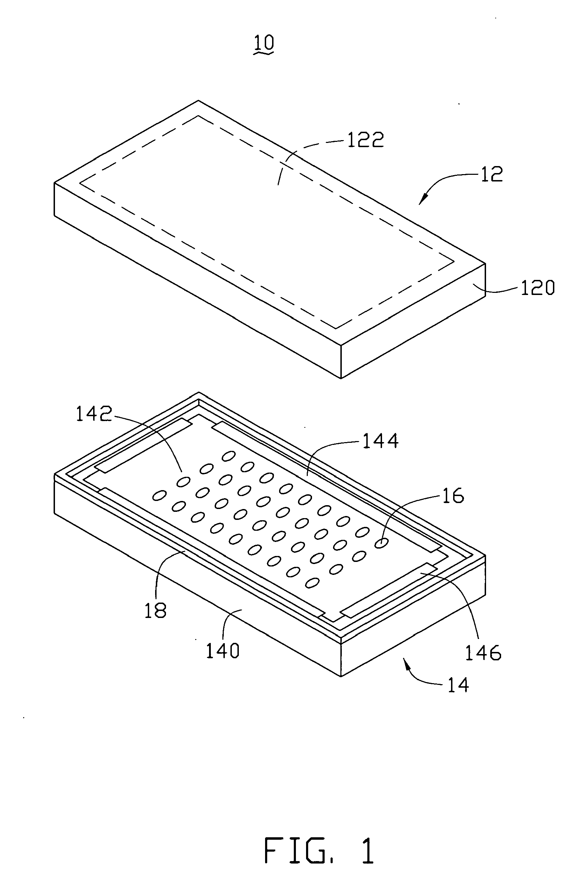

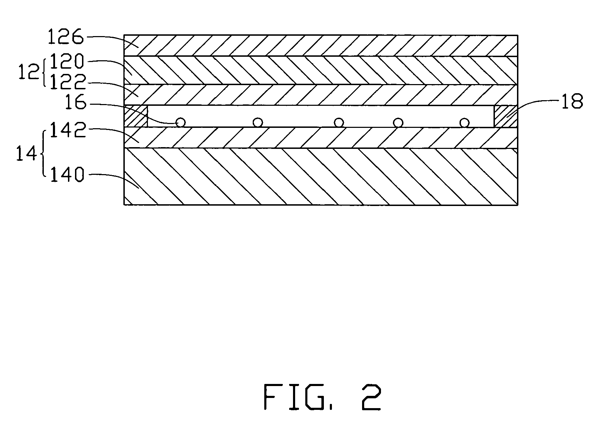

Referring to FIG. 1 and FIG. 2, a touch panel 10 includes a first electrode plate 12, a second electrode plate 14, and a plurality of dot spacers 16 disposed between the first electrode plate 12 and the second electrode plate 14.

The first electrode plate 12 includes a first base 120, and a first conductive layer 122. The first base 120 includes an upper surface and a lower surface, each of which is substantially flat. The first conductive layer 122 is located on the lower surface of the first base 120.

The second electrode plate 14 includes a second base 140, a second conductive layer 142, two first-electrodes 144, and two second-electrodes 146. The second base 140 includes an upper surface and a lower surface, each of which is substantially flat. The two first-electrodes 144, the two second-electrodes 146, and the second conductive layer 142 are located on the upper surface of the second base 140. The two first-electrodes 144 and the two second-electrodes 146 are disposed on corners or edges of the second conductive layer 142, and are electrically connected with the second conductive layer 142. A direction from one of the first-electrodes 144 across the second conductive layer 142 to the other first electrode 144 is defined as a first direction. The two first-electrodes 144 are electrically connected with the second conductive layer 142. A direction from one of the second-electrodes 146 across the second conductive layer 142 to the other second-electrodes 146 is defined as a second direction. The two second-electrodes 146 are electrically connected with the second conductive layer 142.

The first direction is perpendicular to the second direction (i.e., the two first-electrodes 144 are orthogonal to the two second-electrodes 146). The two first-electrodes 144 are aligned parallel to the second direction, and the two second-electrodes 146 are aligned parallel to the first direction. It is to be understood that the first-electrodes 144 and the second-electrodes 146 can be respectively disposed either on the second conductive layer 142, or on the second base 140.

The first base 120 is a transparent and flexible film or plate made of polymer, resin, or any other suitable flexible material. The second base 140 is a transparent board made of rigid material such as glass, diamond, quartz, plastic or flexible material as that of the first base 120. The material of the first base 120 can be polycarbonate (PC), polymethyl methacrylate acrylic (PMMA), polyethylene terephthalate (PET), polyether polysulfones (PES), polyvinyl polychloride (PVC), benzocyclobutenes (BCB), polyesters, and acrylic resins. In the present embodiment, the first base 120 is made of PET, and the thickness thereof is about 2 millimeters; the second base 140 is made of glass.

The first-electrodes 144 and the second-electrodes 146 can be formed by metallic layers, conductive resin layers, carbon nanotube films or made of any other suitable materials. In the present embodiment, the material of the first-electrodes 144 and the second-electrodes 146 is silver paste.

An insulative layer 18 is provided between the first and the second electrode plates 12 and 14. The first electrode plate 12 is located on the insulative layer 18. The first conductive layer 122 is opposite to, but is spaced from, the second conductive layer 142. The dot spacers 16 are located on the second conductive layer 142. A distance between the second electrode plate 14 and the first electrode plate 12 is in an approximate range from 2 to 20 microns. The insulative layer 18 and the dot spacers 16 are made of, for example, insulative resin or any other suitable insulative material. Insulation between the first electrode plate 12 and the second electrode plate 14 is provided by the insulative layer 18 and the dot spacers 16. It is to be understood that the dot spacers 16 are optional, particularly when the touch panel 10 is relatively small. They serve as supports given the size of the span and the strength of the first electrode plate 12.

In one embodiment, a transparent protective film 126 is disposed on the upper surface of the first electrode plate 12. The transparent protective film 126 can be a film that receives a surface hardening treatment to protect the first electrode plate 12 from being scratched when in use. The transparent protective film 126 can be adhered to the upper surface of the first electrode plate 12 or combined with the first electrode plate 12 by a hot-pressing method. The transparent protective film 126 can be plastic or resin. The material of the resin film can be silicon nitride (Si₃N₄), silicon dioxide (SiO₂), BCB, polyesters, acrylic resins, PET, and any combination thereof. Here, the material of the transparent protective film 126 is PET.

Either the first conductive layer 122 or the second conductive layer 142 can, respectively, include a transparent carbon nanotube structure. The carbon nanotube structure includes a plurality of carbon nanotubes, ordered or otherwise, and has substantially a uniform thickness. Specifically, the carbon nanotube structure can include one or a plurality of transparent carbon nanotube layers. It is to be understood that the size of the touch panel 10 is not confined by the size of the carbon nanotube layers. When the size of the carbon nanotube layers is smaller than the desired size of the touch panel 10, a plurality of carbon nanotube layers can be coplanar, disposed side by side or overlapping to cover the entire surface of the first base 120 and the second base 140. Thus, the size of the touch panel 10 can be set as desired. It is to be understood that one carbon nanotube layer can include one or a plurality of carbon nanotube films stacked with each other. A thickness of the carbon nanotube layer is set in a range where the carbon nanotube layer has an acceptable transparency. In the present embodiment, the light transmissivity of the carbon nanotube structure is in the range from about 70% to about 99%. The carbon nanotube structure has an acceptable resistance for using in the touch panel. The resistance of the carbon nanotube structure can be in a range from about 500 ohms per square to about 20000 ohms per square. In the present embodiment, resistance of the carbon nanotube structure is in the range from about 500 ohms per square to about 8000 ohms per square.

The carbon nanotube structure can further include carbon nanotube wire-like structures. The carbon nanotube wire-like structures can be paralleled arranged, waved or crossed with each other in the carbon nanotube structure. The carbon nanotube wire-like structure includes one or a plurality of carbon nanotube wires parallel with each other or twisted together. When the carbon nanotube wires are parallel with each other, the carbon nanotube wire-like structure is in a non-twisted shape. When the carbon nanotube wires are twisted together, the carbon nanotube wire-like structure is in a twisted shape. The carbon nanotube wire can be twisted or non-twisted.

The carbon nanotube structure can both include carbon nanotube films and carbon nanotube wire-like structures overlapped with each other to improve the flexible and toughness of the first conductive layer 122 and the second conductive layer 142.

The carbon nanotube film is formed by a plurality of carbon nanotubes distributed uniformly therein, ordered or otherwise, and has a uniform thickness. The carbon nanotube film can be an ordered film or a disordered film. The ordered carbon nanotube film includes ordered carbon nanotubes. The disordered carbon nanotube film includes disordered carbon nanotubes. The "order" means the carbon nanotubes are primarily oriented along a same direction or several determined directions; the "disorder" means the align directions of the carbon nanotubes are random. Thus, in the disordered carbon nanotube film, the numbers of the carbon nanotubes aligned in every direction are substantially equal.

When the carbon nanotube layer includes some ordered carbon nanotube films stacked with each other, the ordered carbon nanotube films can be aligned along a same direction or aligned along different directions. Thus, an angle α between the aligned directions of the carbon nanotubes in each pair of adjacent carbon nanotube films is in the range 0≦α ≦90°.

Length and width of the carbon nanotube film can be arbitrarily set as desired. The carbon nanotubes in the carbon nanotube film include single-walled, double-walled, or multi-walled carbon nanotubes. Diameters of the single-walled carbon nanotubes, the double-walled carbon nanotubes, and the multi-walled carbon nanotubes can, respectively, be from about 0.5 nanometers to about 50 nanometers, from about 1 nanometers to about 50 nanometers, and from about 1.5 nanometers to 50 nanometers.

Specifically, the carbon nanotube film can be a flocculated carbon nanotube film, a pressed carbon nanotube film or a drawn carbon nanotube film.

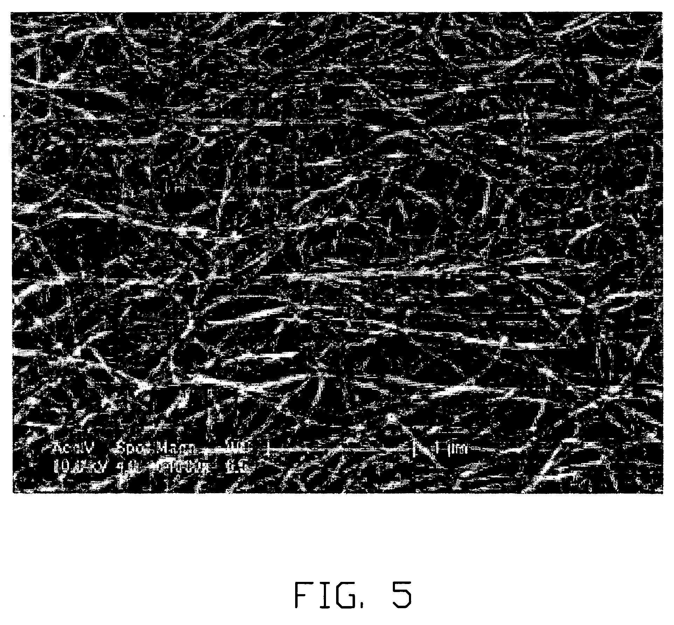

The "flocculated" carbon nanotube film means the carbon nanotube film is formed by a flocculating method. Referring to FIG. 5, the flocculated carbon nanotube film can be a free-standing carbon nanotube film and includes a plurality of long, curved, disordered carbon nanotubes entangled with each other. The adjacent carbon nanotubes are combined and entangled by van der Waals attractive force therebetween, thereby forming an entangled, microporous structure. Thus, the flocculated carbon nanotube film is flexible. Further, the carbon nanotubes in the flocculated carbon nanotube film are substantially uniform. It is understood that the flocculated carbon nanotube film is typically very microporous. Sizes of the micropores are less than 50 micrometers. A length and a width of the flocculated carbon nanotube film can be arbitrarily set, as desired. Due to the flocculated carbon nanotube film having good tensile strength, it can be formed into almost any desired shape. As such, the flocculated carbon nanotube film can have a planar or curved structure. A length of the carbon nanotubes in the flocculated carbon nanotube film is larger than about 10 microns. A thickness of the flocculated carbon nanotube film is from about 0.5 nanometers to about 1 millimeter. Due to the flocculated carbon nanotube film including a plurality of substantially uniform carbon nanotubes and the micropores, the flocculated carbon nanotube film has excellent resistance distribution and light transparence.

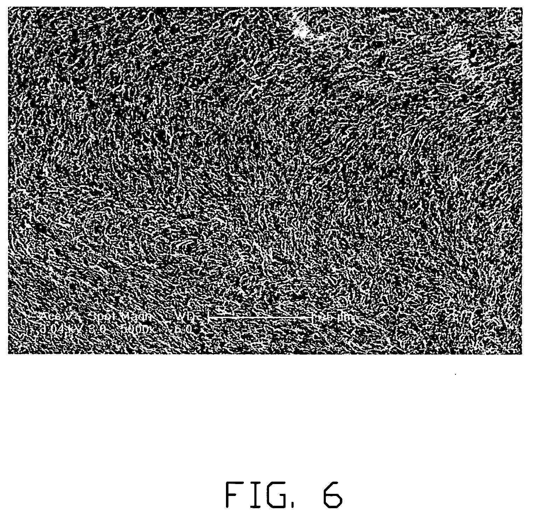

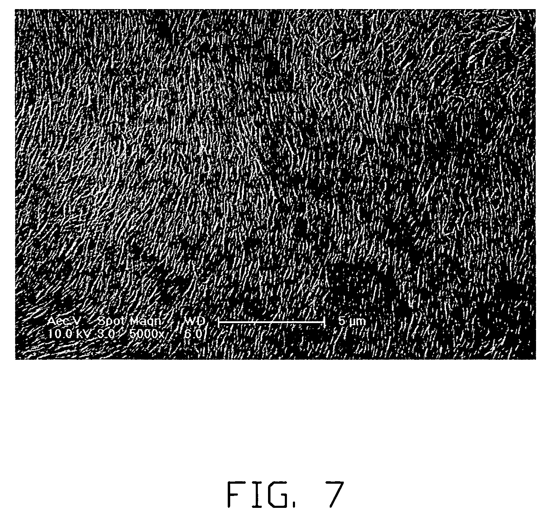

The "pressed" carbon nanotube film means the carbon nanotube film is formed by a pressed method. Referring to FIG. 6 and FIG. 7, the pressed carbon nanotube film can be a free-standing carbon nanotube film. The carbon nanotubes in the pressed carbon nanotube film are arranged isotropically, arranged along a same direction or arranged along different directions. The carbon nanotubes in the pressed carbon nanotube film can be overlapped with each other. An angle between a primary alignment direction of the carbon nanotubes and a base of the pressed carbon nanotube film such that the angle is from about 0 ° to about 15 °. The pressed carbon nanotube film can be formed by pressing a carbon nanotube array. The angle is closely related to pressure applied to the carbon nanotube array. The greater the pressure, the smaller the angle. The carbon nanotubes in the pressed carbon nanotube film can parallel to the surface of the pressed carbon nanotube film when the angle is 0 °. A length and a width of the pressed carbon nanotube film can be arbitrarily set as desired. The adjacent carbon nanotubes are combined and attracted by van der Waals attractive force, thereby forming a free-standing structure. As such, the pressed carbon nanotube film is flexible and has good tensile strength, and can be formed into most any desired shape. The pressed carbon nanotube film includes a plurality of micropores. A diameter of the micropores is less than about 1 micron. As such, a specific area of the pressed carbon nanotube film is extremely large. The thickness of the pressed carbon nanotube film is from about 0.5 nanometers to about 1 millimeter. Due to the pressed carbon nanotube film including a plurality of substantially uniform and parallel carbon nanotubes and the micropores, the pressed carbon nanotube film has excellent resistance distribution and light transparence.

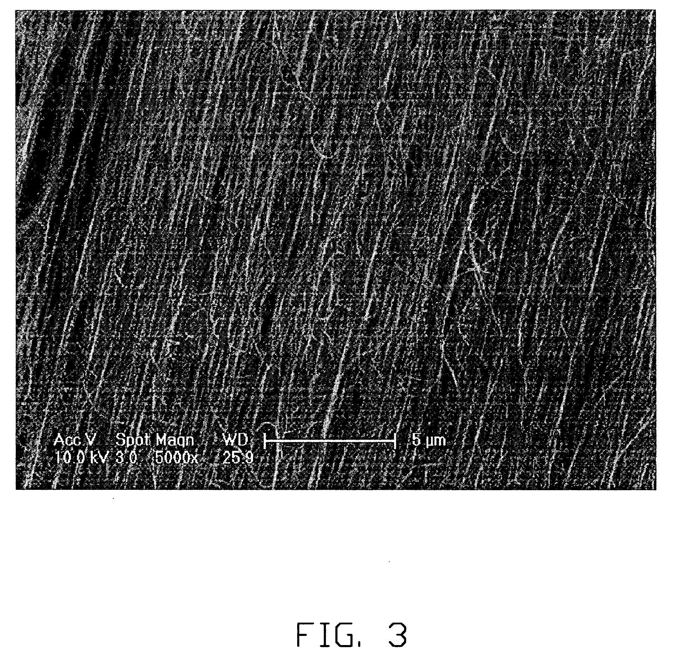

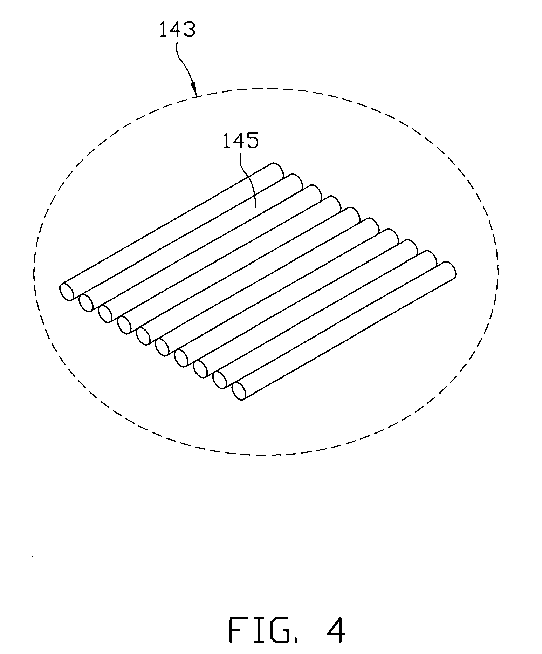

The "drawn" carbon nanotube film means the carbon nanotube film is drawn from a super-aligned carbon nanotube array. The drawn carbon nanotube film is a free-standing carbon nanotube film. Referring to FIG. 3 and FIG. 4, the drawn carbon nanotube film includes a plurality of successive and oriented carbon nanotubes joined end to end by van der Waals attractive force. Specifically, the drawn carbon nanotube film includes a plurality of successively oriented carbon nanotube segments 143 joined end-to-end by van der Waals attractive force therebetween. Each carbon nanotube segment 143 includes a plurality of carbon nanotubes 145 parallel to each other, and combined by van der Waals attractive force therebetween. The carbon nanotube segments 143 can vary in width, thickness, uniformity and shape. The carbon nanotubes 145 in each carbon nanotube segment 143 are also oriented along a preferred orientation. A thickness of the drawn carbon nanotube film ranges from about 0.5 nanometers to about 100 microns. A width of the drawing carbon nanotube film is depends on the size of the carbon nanotube array, and the amount of the carbon nanotubes in the carbon nanotube array which the drawn carbon nanotube film is drawn from. Typically, the length of the drawn carbon nanotube film can ranges from 1 micron to 100 meters (or above), the width of the drawn carbon nanotube film can ranges from 0.5 nanometers to 10 centimeters. The drawn carbon nanotube film is flexible and has a relatively high toughness due to the van der Waals attractive force between the carbon nanotubes. The carbon nanotubes in the drawn carbon nanotube film are uniformly arranged and parallel to a surface of the drawn carbon nanotube film, and thus, the drawn carbon nanotube film has excellent resistance distribution and light transparence. The light transmissivity of a single drawn carbon nanotube film can be above 95%. The resistance of a single drawn carbon nanotube film can be about 500 ohms per square to 8000 ohms per square.

In one embodiment, the second conductive layer 142 includes two carbon nanotube films, one along the first direction and the other along the second direction. The second conductive layer 142 is electrically connected to the two first-electrodes 144 and the two second-electrodes 146. The first direction is perpendicular to the second direction.

The non-twisted carbon nanotube wire is formed by treating the drawn carbon nanotube film with an organic solvent. Specifically, the drawn carbon nanotube film is treated by applying the organic solvent to the drawn carbon nanotube film to soak the entire surface of the drawn carbon nanotube film. After being soaked by the organic solvent, the adjacent paralleled carbon nanotubes in the drawn carbon nanotube film will bundle together, due to the surface tension of the organic solvent when the organic solvent volatilizing, and thus, the drawn carbon nanotube film will be shrunk into non-twisted carbon nanotube wire. The organic solvent is volatile, such as ethanol, methanol, acetone, dichloroethane, or chloroform.

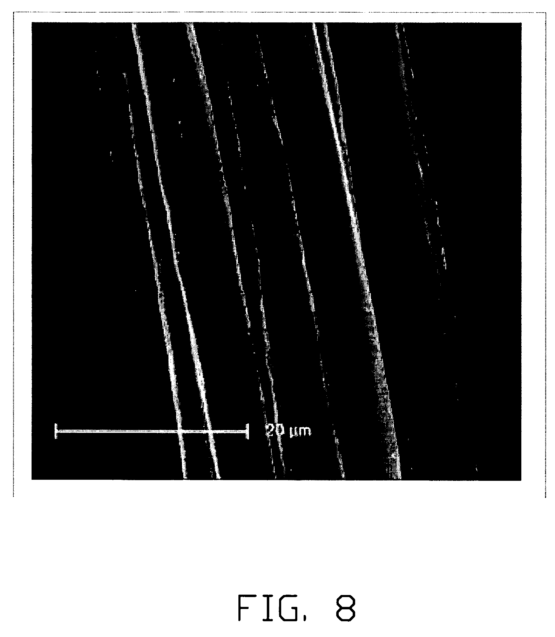

Referring to FIG. 8, the non-twisted carbon nanotube wire includes a plurality of carbon nanotubes substantially oriented along a same direction (i.e., a direction along the length of the non-twisted carbon nanotube wire). The carbon nanotubes are parallel to the axis of the non-twisted carbon nanotube wire. The carbon nanotubes in the non-twisted carbon nanotube wire are joined end to end by van der Waals attractive force therebetween. More specifically, the non-twisted carbon nanotube wire includes a plurality of successive carbon nanotube treated segment joined end to end by van der Waals attractive force therebetween. Each carbon nanotube treated segment includes a plurality of carbon nanotubes substantially parallel to each other, and combined by van der Waals attractive force therebetween. The carbon nanotube treated segments can vary in width, thickness, uniformity and shape. Length of the non-twisted carbon nanotube wire can be arbitrarily set as desired. A diameter of the non-twisted carbon nanotube wire is from about 0.5 nanometers to about 100 micrometers.

The twisted carbon nanotbue wire is formed by twisting a carbon nanotube film by using a mechanical force to turn the two ends of the carbon nanotube film in opposite directions.

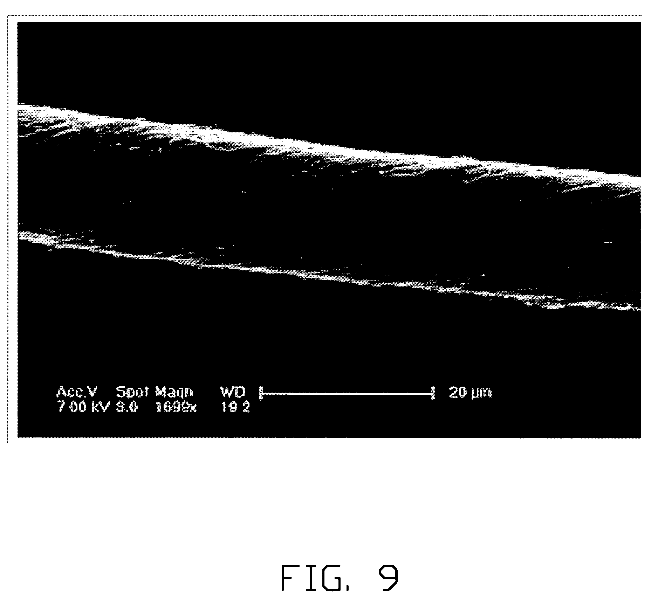

Referring to FIG. 9, the twisted carbon nanotube wire includes a plurality of carbon nanotubes oriented around an axial direction of the twisted carbon nanotube wire. The carbon nanotubes are aligned around the axis of the carbon nanotube twisted wire like a helix. More specifically, the twisted carbon nanotube wire includes a plurality of successive carbon nanotubes joined end to end by van der Waals attractive force therebetween. Length of the carbon nanotube wire can be arbitrarily set as desired. A diameter of the twisted carbon nanotube wire is in an approximate range from 0.5 nanometers to 100 micrometers.

Further, the twisted carbon nanotube wire can be treated with a volatile organic solvent. After being soaked by the organic solvent, the adjacent paralleled carbon nanotubes in the twisted carbon nanotube wire will bundle together, due to the surface tension of the organic solvent when the organic solvent volatilizing. The specific surface area of the twisted carbon nanotube wire will decrease. The density and strength of the twisted carbon nanotube wire will increase.

In one embodiment, the second conductive layer 142 includes a plurality of carbon nanotube wires aligned along the first direction to connect to the two first-electrodes 144, and a plurality of carbon nanotube wires aligned along the second direction to connect to the two second-electrodes 146.

Methods for fabricating the above-described carbon nanotube films are described as below.

A method for fabricating the above-described drawn carbon nanotube film includes (a) providing an carbon nanotube array, specifically and providing a super-aligned carbon nanotube array; and (b) pulling out a carbon nanotube film from the carbon nanotube array, by using a tool (e.g., adhesive tape, pliers, tweezers, clamp or another tool allowing multiple carbon nanotubes to be gripped and pulled simultaneously).

In step (a), a super-aligned carbon nanotube array can be formed by the substeps of: (a1) providing a substantially flat and smooth substrate; (a2) forming a catalyst layer on the substrate; (a3) annealing the substrate with the catalyst layer in air at a temperature in the range from about 700°C to about 900°C for about 30 to about 90 minutes; (a4) heating the substrate with the catalyst layer to a temperature in the range from about 500°C to about 740°C in a furnace with a protective gas therein; and (a5) supplying a carbon source gas to the furnace for about 5 to about 30 minutes and growing the super-aligned carbon nanotube array on the substrate.

In step (a1), the substrate can be a P-type silicon wafer, an N-type silicon wafer, or a silicon wafer with a film of silicon dioxide thereon. Here, a 4-inch P-type silicon wafer is used as the substrate.

In step (a2), the catalyst can be made of iron (Fe), cobalt (Co), nickel (Ni), or any alloy thereof.

In step (a4), the protective gas can be made up of at least one of nitrogen (N2), ammonia (NH3), and a noble gas. In step (a5), the carbon source gas can be a hydrocarbon gas, such as ethylene (C2H4), methane (CH4), acetylene (C2H2), ethane (C2H6), or any combination thereof.

The super-aligned carbon nanotube array can have a height of about 50 microns to 5 millimeters. The super-aligned array includes a plurality of carbon nanotubes parallel to each other and approximately perpendicular to the substrate. The carbon nanotubes in the array can be multi-walled carbon nanotubes, double-walled carbon nanotubes, or single-walled carbon nanotubes. Diameters of the multi-walled carbon nanotubes are from about 1.5 nanometers to about 50 nanometers. Diameters of the double-walled carbon nanotubes are from about 1 nanometer to about 50 nanometers. Diameters of the single-walled carbon nanotubes are from about 0.5 nanometers to about 50 nanometers.

The super-aligned carbon nanotube array formed under the above conditions is essentially free of impurities such as carbonaceous or residual catalyst particles. The carbon nanotubes in the super-aligned array are closely packed together by van der Waals attractive force.

In step (b), the carbon nanotube film can be formed by (b1) selecting one or more carbon nanotubes having a predetermined width from the super-aligned carbon nanotube array; and (b2) pulling the carbon nanotubes to form carbon nanotube segments that are joined end to end at an uniform speed to achieve a uniform carbon nanotube film.

In step (b1), the carbon nanotube segments having a predetermined width can be selected by using a tool such as an adhesive tape, a tweezers, or a clamp to contact the super-aligned array.

In step (b2), the pulling direction is substantially perpendicular to the growing direction of the super-aligned carbon nanotube array. Each carbon nanotube segment includes a plurality of carbon nanotubes parallel to each other.

More specifically, during the pulling process, as the initial carbon nanotube segments are drawn out, other carbon nanotube segments are also drawn out end to end due to van der Waals attractive force between ends of adjacent segments. This process of drawing ensures a substantially continuous and uniform carbon nanotube film having a predetermined width can be formed. The carbon nanotubes in the drawn carbon nanotube film are all substantially parallel to the pulling/drawing direction of the drawn carbon nanotube film, and the drawn carbon nanotube film produced in such manner can be selectively formed to have a predetermined width. The drawn carbon nanotube film formed by the pulling/drawing method has superior uniformity of thickness and conductivity over a typical disordered carbon nanotube film. Further, the pulling/drawing method is simple, fast, and suitable for industrial applications.

It is noted that because the carbon nanotubes in the super-aligned array have a high purity and a high specific surface area, the drawn carbon nanotube film is adherent in nature. As such, the carbon nanotube film can be directly adhered to a surface of the first base 120, the second base 140, and/or another drawn carbon nanotube film to form the first conductive layer 122 and the second conductive layer 142. In the alternative, other bonding means can be applied.

It is to be understood that, a plurality of drawn carbon nanotube films can be adhered to the surfaces of the first base 120 and the second base 140 and stacked on each other to form carbon nanotube layers. The number of the drawn carbon nanotube films and the angle between the aligned directions of two adjacent drawn carbon nanotube films can be set as desired. When the drawn carbon nanotube films are adhered along a same direction, the carbon nanotubes in each carbon nanotube layer are arranged along the same direction. When the drawn carbon nanotube films are adhered along different directions, an angle α between the alignment directions of the carbon nanotubes in each two adjacent drawn carbon nanotube films is in the range 0≦α ≦90°. The angle α is the difference in the two pulling directions of the adjacent drawn carbon nanotube films. The placing the drawn carbon nanotube films at an angle helps increase the strength of the overall carbon nanotube structure and providing an equal conductivity along the first direction and the second direction. Having the drawn carbon nanotube films aligned will increase the efficiently of the transmission. The adjacent drawn carbon nanotube films are combined by van de Waals attractive force to form the stable carbon nanotube layer. In the present embodiment, two carbon nanotube films are respectively adhered on the first base 120, one along the first direction and the other along the second direction to form the first conductive layer 122. Two carbon nanotube films are adhered on the second base 140, one along the first direction and the other along the second direction to form the second conductive layer 142. The second conductive layer 142 is electrically connected to the two first-electrodes 144 and the two second-electrodes 146. The first direction is perpendicular to the second direction.

Once the drawn carbon nanotube film is adhered to the surface of the substrate, the drawn carbon nanotube film can be treated with an organic solvent. Specifically, the drawn carbon nanotube film can be treated by applying organic solvent to the drawn carbon nanotube film to soak the entire surface of the drawn carbon nanotube film. The organic solvent is volatile and can be selected from the group consisting of ethanol, methanol, acetone, dichloroethane, chloroform, any appropriate mixture thereof. In the present embodiment, the organic solvent is ethanol. After being soaked by the organic solvent, carbon nanotube strings will be formed by adjacent carbon nanotubes in the drawn carbon nanotube film, that are able to do so, bundling together, due to the surface tension of the organic solvent when the organic solvent volatilizing. The contacting area of the drawn carbon nanotube film with the substrate will increase, and thus, the drawn carbon nanotube film will more firmly adhere to the surface of the substrate. In another aspect, due to the decrease of the specific surface area via bundling, the mechanical strength and toughness of the drawn carbon nanotube film are increased and the coefficient of friction of the drawn carbon nanotube films is reduced. Macroscopically, the film will be an approximately uniform drawn carbon nanotube film.

A method for fabricating the above-described flocculated carbon nanotube film includes (a') providing a raw material of carbon nanotubes; (b') adding the raw material of carbon nanotubes to a solvent to get a carbon nanotube flocculated structure; and (c') separating the flocculated structure from the solvent, and shaping/molding the separated flocculated structure to obtain a flocculated carbon nanotube film.

In step (a'), the raw material of carbon nanotubes can be made by Chemical Vapor Deposition (CVD), Laser Ablation, or Arc-Charge. A raw material of carbon nanotubes is scraped from a carbon nanotube array, quite suitably, a super-aligned carbon nanotube array. The super-aligned carbon nanotube array is formed by above-described step (a). The super-aligned carbon nanotube array is scraped from the substrate by a knife or other similar devices to obtain the raw material of carbon nanotubes.

In step (b'), the solvent can be selected from the group consisting of water and volatile organic solvent. After adding the raw material of carbon nanotubes to the solvent, a process of flocculating is executed to get the flocculated structure. The process of flocculating can be selected from the group consisting of ultrasonic dispersion and high-strength agitating/vibrating. In this embodiment ultrasonic dispersion is used to flocculate the solvent containing the carbon nanotubes for about 10∼30 minutes. Due to the carbon nanotubes in the solvent having a large specific surface area and the carbon nanotubes having a large van der Waals attractive force, the flocculated carbon nanotubes form an entangled structure (i.e., carbon nanotube flocculated structure).

In step (c'), the process of separating the flocculated structure from the solvent includes (c'1) pouring the solvent containing the flocculated structure through a filter into a funnel; and (c'2) drying the flocculated structure on the filter to obtain the separated flocculated structure of carbon nanotubes.

In step (c'2), a time of drying can be selected according to practical needs. The carbon nanotube flocculated structure on the filter is bundled together, so as to form an irregular carbon nanotube flocculate structure.

The process of shaping/molding includes (c'3) putting the separated flocculated structure on the first base 120 and/or the second base 140, and spreading the flocculated structure to form a predetermined structure; (c'4) pressing the spread flocculated structure with a certain pressure to yield a desirable shape; and (c'5) drying the spread flocculated structure to remove the residual solvent or volatilizing the residual solvent to form a flocculated carbon nanotube film.

It is to be understood that the size of the spread flocculated structure can be used to control a thickness and a surface density of the flocculated carbon nanotube film. As such, the larger the area of a given amount of the flocculated structure is spread over, the less the thickness and density of the flocculated carbon nanotube film.

The carbon nanotubes in the flocculated carbon nanotube film entangled to each other provides strength to the carbon nanotube film. Therefore, the flocculated carbon nanotube film is easy to be folded and/or bent into arbitrary shapes without rupture. In practical use, the flocculated carbon nanotube film can, be cut into any desired shape and size.

A method for fabricating the above-described pressed carbon nanotube film includes (a") providing a carbon nanotube array; (b") pressing the carbon nanotube array with a pressing device to form a carbon nanotube film on the first and second bases 120, 140 respectively.

In step (a"), the carbon nanotube array can be the super-aligned carbon nanotube array. The super-aligned carbon nanotube array is formed by above-described step (a).

In step (b"), since the carbon nanotube array is adherent in nature, the first base 120 and the second base 140 can be firmly adhered to the carbon nanotube array. In the present embodiment, the pressed carbon nanotube film can be formed by either of two methods.

The first method includes (b" 1) providing a pressing device, and pressing the carbon nanotube array to form a pressed carbon nanotube film; (b"2) cutting the pressed carbon nanotube film into sizes of the first base 120 and the second base 140; and (b"3) adhering the cut pressed carbon nanotube films on the first base 120 and the second base 140 respectively to form the first conductive layer 122 and the second conductive layer 142.

The second method includes (b"1') placing the first base 120 and the second base 140 on the carbon nanotube array; (b"2') providing a pressing device, and pressing the first base 120 and the second base 140 so that the first base 120 and the second base 140 are pressed onto the carbon nanotube array to form a pressed carbon nanotube film on each of the first base 120 and the second base 140; and (b"3') cutting away excess carbon nanotube film to form the first conductive layer 122 on the first base 120 and the second conductive layer 142 on the second base 140.

In step (b"), a certain pressure can be applied to the carbon nanotube array by the pressing device. In the process of pressing, the carbon nanotubes in the carbon nanotube array form the pressed carbon nanotube film under pressure. The carbon nanotubes in the pressed carbon nanotube film are nearly all parallel to a surface of the pressed carbon nanotube film. In step (b"1), in the process of pressing, the carbon nanotubes slant, thereby forming a pressed carbon nanotube film having a free-standing structure on the base on which the carbon nanotube array is initially formed. The carbon nanotubes in the free-standing structure are nearly all parallel to a major surface of the pressed carbon nanotube film, and are arranged isotropically, or arranged along a same direction or arranged along different directions. In step (b"2'), the pressed carbon nanotube film, under a certain pressure, separates from the growing base on which the carbon nanotube array is initially formed, and is adhered on the first base and the second base respectively because of the adhesive properties of the carbon nanotubes.

The pressing device can be a pressure head. The pressure head has a smooth surface. It is to be understood that the shape of the pressure head and the pressing direction can determine the direction of the carbon nanotubes arranged in the pressed carbon nanotube film. Specifically, when a planar pressure head is used to press the carbon nanotube array along a direction perpendicular to the applicable base, a pressed carbon nanotube film having a plurality of carbon nanotubes isotropically arranged can be obtained. Referring to FIG. 4, when a roller-shaped pressure head is used to travel across and press the carbon nanotube array along a predetermined single direction, a pressed carbon nanotube film having a plurality of carbon nanotubes aligned along a general direction is obtained. Referring to FIG. 5, when a roller-shaped pressure head is used to travel across and press the carbon nanotube array along different directions, a pressed carbon nanotube film having a plurality of carbon nanotubes aligned along corresponding different directions is obtained.

In the process of pressing, the carbon nanotubes will fall over, thereby forming a pressed carbon nanotube film having a free-standing structure with slanted carbon nanotubes. The carbon nanotubes in the free-standing structure are nearly all parallel to a surface of the pressed carbon nanotube film, and are isotropically arranged, arranged along a same direction, or arranged along different directions.

The touch panel 10 can further include a shielding layer (not shown) disposed on the lower surface of the second base 140. The material of the shielding layer can be indium tin oxide, antimony tin oxide, nickel-gold films, conductive resin films, carbon nanotube films, or other flexible and conductive films. In the present embodiment, the shielding layer is a carbon nanotube film. The carbon nanotube film includes a plurality of carbon nanotubes, and the alignment of the carbon nanotubes therein can be set as desired. The carbon nanotubes in the carbon nanotube film of the shielding layer are arranged along a same direction. The carbon nanotube film is connected to the ground and plays a role of shielding, and, thus, enables the touch panel 10 to operate without interference (e.g., electromagnetic interference). The carbon nanotube film can be the drawn carbon nanotube film, the flocculated carbon nanotube film, or the pressed carbon nanotube film.

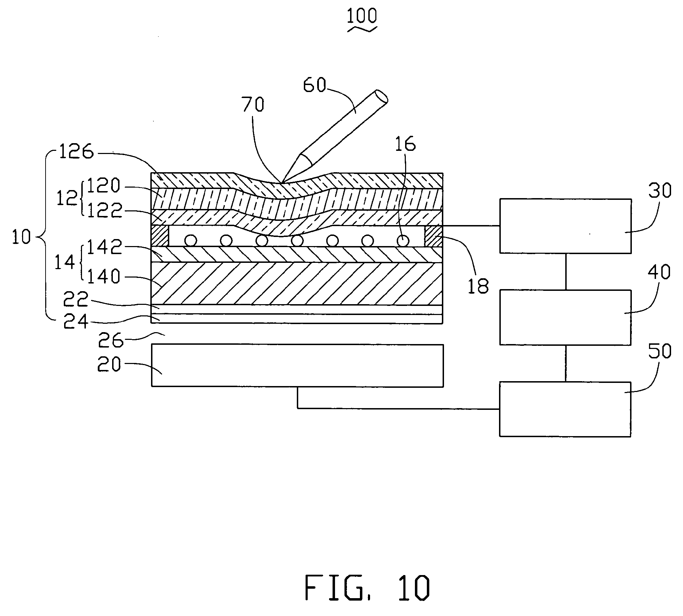

Referring to FIG. 10, a display device 100 includes the touch panel 10, a display element 20, a first controller 30, a central processing unit (CPU) 40, and a second controller 50. The touch panel 10 is opposite and adjacent to the display element 20 and is connected to the first controller 30 by an external circuit. The touch panel 10 can be spaced at a distance from the display element 20 or can be installed directly on the display element 20. The first controller 30, the CPU 40, and the second controller 50 are electrically connected. The display element 20 is electrically connected to the second controller. As such, the CPU 40 is connected to the second controller 50 to control the display element 20.

The display element 20 can be selected from a group consisting of liquid crystal display, field emission display, plasma display, electroluminescent display, vacuum fluorescent display, cathode ray tube, and another display device.

When the touch panel 10 includes a shielding layer 22, a passivation layer 24 can be disposed on a surface of the shielding layer 22, facing away from the second base 140. The material of the passivation layer 24 can be selected from a group consisting of silicon nitride, silicon dioxide, benzocyclobutenes, polyesters, acrylic resins, polyethylene terephthalate, and any combination thereof. The passivation layer 24 can be spaced at a certain distance from the display element 20 or can be directly installed on the display element 20. When the passivation layer 24 is spaced at a distance from the display element 20, two or more spacers can be used. Thereby, a gap 26 is provided between the passivation layer 24 and the display element 20. The material of the passivation layer 24 can, for example, be silicon nitride or silicon dioxide. The paissivation layer 24 protects the shelding layer 22 from chemical damage (e.g., humidity of the surrounding) or mechanical damage (e.g., scratching during fabrication of the touch panel).

In operation, a voltage of 5V is respectively and alternately applied to the two first-electrodes 144 and the two second-electrodes 146 of the second electrode plate 14. A user operates the display by pressing the first electrode plate 12 of the touch panel 10 with a finger, a pen 60, or the like while visually observing the display element 20 through the touch panel. This pressing causes a deformation 70 of the first electrode plate 12. The deformation 70 of the first electrode plate 12 causes a connection between the first conductive layer 122 and the second conduction layer 142 of the second electrode plate 14. Change in voltage along the first direction between the pressing point and the first-electrode 144, and change in voltage along the second direction between the pressing point and the second-electrode 146 are occurred, and can be detected by the first controller 30. Then, the first controller 30 transforms the changes in voltages into coordinates of the pressing point and sends the coordinates thereof to the CPU 40. The CPU 40 then sends out commands according to the coordinates of the pressing point and controls the display of the display element 20 by the second controller 30.

The properties of the carbon nanotubes provide superior toughness, high mechanical strength, and uniform conductivity to the carbon nanotube film and the carbon nanotube structure. Thus, the touch panel and the display device using the same adopting the carbon nanotube structure are durable and highly reliable. The drawn carbon nanotube film includes a plurality of successively oriented carbon nanotubes joined end to end by van der Waals attractive force therebetween. As such, the carbon nanotube film is flexible, and suitable for using as the conductive layer in the touch panel. When the flexible bases are used in the touch panel, the flexible touch panel can be obtained and thus this can be applied to a flexible display element. Further, the pulling method for fabricating each carbon nanotube film is simple and the adhesive carbon nanotube film can be disposed on the substrate directly. As such, the method for fabricating the carbon nanotube film is suitable for the mass production of touch panels and display devices using the same and reduces the costs thereof. Furthermore, the carbon nanotube film has a high transparency, thereby promoting improved brightness of the touch panel and the display devices using the same. Additionally, since the carbon nanotubes have excellent electrical conductivity properties, the carbon nanotube structure formed by a plurality of carbon nanotubes has a uniform resistance distribution. Thus the touch panel and the display device adopting the carbon nanotube layer have improved sensitivity and accuracy.

The features of the embodiment can be freely combined.

## Claims

1. A touch panel (10) comprising:
a first electrode plate (12) comprising a first base (120) and a first conductive layer (122) disposed on a surface of the first base (120);
a second electrode plate (14) separated from the first electrode plate (12), and comprising a second base (140), a second conductive layer (142) disposed on a surface of the second base (140) and faced to the first conductive layer (122), two first electrodes (144), and two second electrodes (146), the two first electrodes (144) and the two second electrodes (146) being connected to the second conductive layer (142), wherein
the first conductive layer (122) comprises a carbon nanotube structure, and the carbon nanotube structure comprises a plurality of carbon nanotubes, the two first electrodes (144) and the two second electrodes (146) are located separately at opposite ends of the second conductive layer (142), a direction from one of the two first electrodes (144) across the second conductive layer (142) to the other of the two first electrodes (144) is defined as a first direction, a direction from one of the two second electrodes (146) across the second conductive layer (142) to the other of the two second electrodes (146) is defined as a second direction and is different from the first direction,
the touch panel being
**characterized by** the second conductive layer (142) comprising:
a first carbon nanotube film; and
a second carbon nanotube film stacked with the first carbon nanotube film;
wherein the first carbon nanotube film comprises a plurality of first carbon nanotubes, the second carbon nanotube film comprises a plurality of second carbon nanotubes, the plurality of first carbon nanotubes are arranged along the first direction, and the plurality of second carbon nanotubes are arranged along the second direction.

2. The touch panel (10) as claimed in claim 1, wherein the carbon nanotube structure of the first conductive layer comprises a plurality of disordered carbon nanotubes entangled with each other or isotropically arranged.

3. The touch panel (10) as claimed in claim 1, wherein the carbon nanotube structure of the first conductive layer comprises a plurality of ordered carbon nanotubes distributed uniformly therein, and the ordered carbon nanotubes are primarily oriented along a same direction or along several directions.

4. The touch panel (10) as claimed in claim 1 or 3, wherein the carbon nanotube structure of the first conductive layer comprises at least one carbon nanotube film, at least one carbon nanotube wire or a combination thereof, the carbon nanotube film or the carbon nanotube wire is drawn from a carbon nanotube array, and the carbon nanotube film or the carbon nanotube wire further comprises a plurality of successive carbon nanotubes joined end to end by van der Waals attractive force therebetween, and the carbon nanotubes in the carbon nanotube film or the carbon nanotube wire are primarily aligned along a same direction.

5. The touch panel (10) as claimed in claim 4, wherein the carbon nanotube structure of the first conductive layer comprises at least two layers of the carbon nanotube films stacked with each other.

6. The touch panel (10) as claimed in any one of claims 4 or 5, wherein a thickness of each of the first carbon nanotube film and the second carbon nanotube film ranges from about 0.5 nanometers to about 100 micrometers, and a diameter of the carbon nanotube wire ranges from about 0.5 nanometers to about 100 micrometers.

7. The touch panel (10) as claimed in any one of claims 1 to 6, wherein the light transmissivity of each of the carbon nanotube structure of the first conductive layer, the first carbon nanotube film, and the second carbon nanotube film is in the range from about 70% to about 99%.

8. The touch panel (10) as claimed in any one of claims 1 to 7, wherein the resistance of each of the carbon nanotube structure of the first conductive layer, the first carbon nanotube film, and the second carbon nanotube film is in a range from about 500 ohms per square to about 20000 ohms per square.

9. The touch panel (10) as claimed in any one of claims 1 to 8, wherein the first direction is perpendicular to the second direction.

10. The touch panel (10) as claimed in any one of claims 1 to 9, wherein the carbon nanotube structure of the first conductive layer comprises at least two carbon nanotube films, the carbon nanotubes in one of the two carbon nanotube films are oriented along the first direction, and the carbon nanotubes in the other one of the two carbon nanotube films are oriented along the second direction.

11. The touch panel (10) as claimed in any one of claims 1 to 10, wherein the carbon nanotube structure of the first conductive layer comprises a plurality of carbon nanotube wires, and some of the plurality of carbon nanotube wires are aligned along the first direction, and the other of the plurality of carbon nanotube wires are aligned along the second direction.

12. The touch panel (10) as claimed in any one of claims 1 to 11, further comprising an insulative layer (18) located between the first and second electrode plates (12, 14), and the insulative layer (18) separates the first electrode plate (12) from the second electrode plate (14).

13. A display device (100) comprising:
a touch panel (10) as claimed in claim 1; and
a display element (20) located adjacent to the second electrode plate (14) of the touch panel (10).

14. The display device as claimed in claim 13, wherein the touch panel (10) is spaced from the display element (20) with a distance or the touch panel (10) is located on the display element (20).

15. The touch panel as claimed in any one of claims 1 to 12, wherein the plurality of first carbon nanotubes are parallel to a surface of the first carbon nanotube film, the plurality of second carbon nanotubes are parallel to a surface of the second carbon nanotube film, the plurality of first carbon nanotubes are successive and joined end to end by van der Waals attractive force therebetween, the plurality of second carbon nanotubes are successive and joined end to end by van der Waals attractive force therebetween.

## Patentansprüche

1. Ein Berührungsbildschirm (10), aufweisend:
eine erste Elektrodenplatte (12), die eine erste Basis (120) und eine erste leitende Schicht (122) aufweist, die auf einer Oberfläche von der ersten Basis (120) angeordnet ist;
eine zweite Elektrodenplatte (14), die von der ersten Elektrodenplatte (12) beabstandet ist und eine zweite Basis (140), eine zweite leitende Schicht (142), die auf einer Oberfläche von der zweiten Basis (140) angeordnet ist und in Richtung der ersten leitenden Schicht (122) weist, zwei erste Elektroden (144) und zwei zweite Elektroden (146) aufweist, wobei die zwei ersten Elektroden (144) und die zwei zweiten Elektroden (146) mit der zweiten leitenden Schicht (142) verbunden sind, wobei
die erste leitende Schicht (122) eine Kohlenstoff-Nanoröhrenstruktur aufweist und die Kohlenstoff-Nanoröhrenstruktur eine Vielzahl von Kohlenstoff-Nanoröhren aufweist, wobei die zwei ersten Elektroden (144) und die zwei zweiten Elektroden (146) getrennt an gegenüberliegenden Enden von der zweiten leitenden Schicht (142) angeordnet sind, wobei eine Richtung von einer von den zwei ersten Elektroden (144) über die zweite leitende Schicht (142) zu der anderen von den zwei ersten Elektroden (144) als eine erste Richtung definiert ist, eine Richtung von einer von den zwei zweiten Elektroden (146) über die zweite leitende Schicht (142) zu der anderen von den zwei zweiten Elektroden (146) als eine zweite Richtung definiert ist und von der ersten Richtung verschieden ist,
wobei der Berührungsbildschirm **dadurch gekennzeichnet ist, dass** die zweite leitende Schicht (142) aufweist:
eine erste Kohlenstoff-Nanoröhrenschicht; und
eine mit der ersten Kohlenstoff-Nanoröhrenschicht gestapelte zweite Kohlenstoff-Nanoröhrenschicht;
wobei die erste Kohlenstoff-Nanoröhrenschicht eine Vielzahl von ersten Kohlenstoff-Nanoröhren aufweist, die zweite KohlenstoffNanoröhrenschicht eine Vielzahl von zweiten Kohlenstoff-Nanoröhren aufweist, die Vielzahl von ersten Kohlenstoff-Nanoröhren entlang der ersten Richtung angeordnet sind und die Vielzahl von zweiten Kohlenstoff-Nanoröhren entlang der zweiten Richtung angeordnet sind.

2. Der Berührungsbildschirm (10) wie in Anspruch 1 beansprucht, wobei die Kohlenstoff-Nanoröhrenstruktur von der ersten leitenden Schicht eine Vielzahl von ungeordneten Kohlenstoff-Nanoröhren aufweist, die miteinander verschlungen oder isotrop angeordnet sind.

3. Der Berührungsbildschirm (10) wie in Anspruch 1 beansprucht, wobei die Kohlenstoff-Nanoröhrenstruktur von der ersten leitenden Schicht eine Vielzahl von geordneten Kohlenstoff-Nanoröhren aufweist, die darin gleichmäßig verteilt sind, und die geordneten Kohlenstoff-Nanoröhren primär entlang einer selben Richtung oder entlang verschiedener Richtungen orientiert sind.

4. Der Berührungsbildschirm (10) wie in Anspruch 1 oder 3 beansprucht, wobei die Kohlenstoff-Nanoröhrenstruktur von der ersten leitenden Schicht wenigstens eine Kohlenstoff-Nanoröhrenschicht, wenigstens einen Kohlenstoff-Nanoröhrendraht oder eine Kombination davon aufweist, wobei die Kohlenstoff-Nanoröhrenschicht oder der Kohlenstoff-Nanoröhrendraht aus einer Kohlenstoff-Nanoröhrenanordnung gezogen ist und die Kohlenstoff-Nanoröhrenschicht oder der Kohlenstoff-Nanoröhrendraht weiter eine Vielzahl von aufeinanderfolgenden Kohlenstoff-Nanoröhren aufweist, die Ende an Ende mittels der van der Waals'schen Anziehungskraft dazwischen verbunden sind und die Kohlenstoff-Nanoröhren in der KohlenstoffNanoröhrenschicht oder in dem Kohlenstoff-Nanoröhrendraht primär entlang einer selben Richtung ausgerichtet sind.

5. Der Berührungsbildschirm (10) wie in Anspruch 4 beansprucht, wobei die Kohlenstoff-Nanoröhrenstruktur von der ersten leitenden Schicht wenigstens zwei Schichten von den Kohlenstoff-Nanoröhrenschichten aufweist, die miteinander gestapelt sind.

6. Der Berührungsbildschirm (10) wie in einem der Ansprüche 4 oder 5 beansprucht, wobei eine Dicke von jeder von der ersten Kohlenstoff-Nanoröhrenschicht und der zweiten Kohlenstoff-Nanoröhrenschicht von etwa 0,5 Nanometern bis etwa 100 Mikrometern reicht und ein Durchmesser von den Kohlenstoff-Nanoröhrendrähten von etwa 0,5 Nanometern bis etwa 100 Mikrometern reicht.

7. Der Berührungsbildschirm (10) wie in einem der Ansprüche 1 bis 6 beansprucht, wobei die Lichtdurchlässigkeit von jedem von der Kohlenstoff-Nanoröhrenstruktur von der ersten leitenden Schicht, der ersten Kohlenstoff-Nanoröhrenschicht und der zweiten KohlenstoffNanoröhrenschicht sich in einem Bereich von etwa 70 % bis etwa 99 % bewegt.

8. Der Berührungsbildschirm (10) wie in einem der Ansprüche 1 bis 7 beansprucht, wobei der Widerstand von jedem von der KohlenstoffNanoröhrenstruktur von der ersten leitenden Schicht, der ersten Kohlenstoff-Nanoröhrenschicht und der zweiten Kohlenstoff-Nanoröhrenschicht sich in einem Bereich von etwa 500 Ohm pro Quadrat bis etwa 20000 Ohm pro Quadrat bewegt.

9. Der Berührungsbildschirm (10) wie in einem der Ansprüche 1 bis 8 beansprucht, wobei die erste Richtung senkrecht zu der zweiten Richtung ist.

10. Der Berührungsbildschirm (10) wie in einem der Ansprüche 1 bis 9 beansprucht, wobei die Kohlenstoff-Nanoröhrenstruktur von der ersten leitenden Schicht wenigstens zwei Kohlenstoff-Nanoröhrenschichten aufweist, die Kohlenstoff-Nanoröhren in einer von den zwei Kohlenstoff-Nanoröhrenschichten entlang der ersten Richtung orientiert sind und die Kohlenstoff-Nanoröhren in der anderen von den zwei Kohlenstoff-Nanoröhrenschichten entlang der zweiten Richtung orientiert sind.

11. Der Berührungsbildschirm (10) wie in einem der Ansprüche 1 bis 10 beansprucht, wobei die Kohlenstoff-Nanoröhrenstruktur von der ersten leitenden Schicht eine Vielzahl von Kohlenstoff-Nanoröhrendrähten aufweist und einige von der Vielzahl von Kohlenstoff-Nanoröhrendrähten entlang der ersten Richtung ausgerichtet sind und die anderen von der Vielzahl von Kohlenstoff-Nanoröhrendrähten entlang der zweiten Richtung ausgerichtet sind.

12. Der Berührungsbildschirm (10) wie in einem der Ansprüche 1 bis 11 beansprucht, weiter aufweisend eine Isolierschicht (18), die sich zwischen den ersten und zweiten Elektrodenplatten (12, 14) befindet und wobei die Isolierschicht (18) die erste Elektrodenplatte (12) von der zweiten Elektrodenplatte (14) trennt.

13. Eine Anzeigevorrichtung (100), aufweisend:
einen Berührungsbildschirm (10) wie in Anspruch 1 beansprucht; und
ein Anzeigeelement (20), das sich benachbart zu der zweiten Elektrodenplatte (14) von dem Berührungsbildschirm (10) befindet.

14. Die Anzeigevorrichtung wie in Anspruch 13 beansprucht, wobei der Berührungsbildschirm (10) von dem Anzeigeelement (20) mit einem Abstand beabstandet ist oder der Berührungsbildschirm (10) sich auf dem Anzeigeelement (20) befindet.

15. Der Berührungsbildschirm wie in einem der Ansprüche 1 bis 12 beansprucht, wobei die Vielzahl von ersten Kohlenstoff-Nanoröhren parallel zu einer Oberfläche von der ersten Kohlenstoff-Nanoröhrenschicht sind, die Vielzahl von zweiten Kohlenstoff-Nanoröhren parallel zu einer Oberfläche von der zweiten Kohlenstoff-Nanoröhrenschicht sind, die Vielzahl von ersten Kohlenstoff-Nanoröhren aufeinanderfolgend und Ende an Ende mittels der van der Waals'schen Anziehungskraft dazwischen verbunden sind, die Vielzahl von zweiten Kohlenstoff-Nanoröhren aufeinanderfolgend und Ende an Ende mittels der van der Waals'schen Anziehungskraft dazwischen verbunden sind.

## Revendications

1. Panneau tactile (10) comprenant :
une première plaque d'électrodes (12) comprenant une première base (120) et une première couche conductrice (122) disposée sur une surface de la première base (120) ;
une seconde plaque d'électrodes (14) séparée de la première plaque d'électrodes (12) et comprenant une seconde base (140), une seconde couche conductrice (142) disposée sur une surface de la seconde base (140) et en regard de la première couche conductrice (122), deux premières électrodes (144) et deux secondes électrodes (146), les deux premières électrodes (144) et les deux secondes électrodes (146) étant connectées à la seconde couche conductrice (142), dans lequel :
la première couche conductrice (122) comprend une structure de nanotubes de carbone et la structure de nanotubes de carbone comprend une pluralité de nanotubes de carbone, les deux premières électrodes (144) et les deux secondes électrodes (146) sont situées séparément sur les extrémités opposées de la seconde couche conductrice (142), une direction de l'une des deux premières électrodes (144) aux bornes de la seconde couche conductrice (142) à l'autre des deux premières électrodes (144) est définie comme première direction, une direction des deux secondes électrodes (146) aux bornes de la seconde couche conductrice (142) à l'autre des deux secondes électrodes (146) est définie comme seconde direction et est différente de la première direction,
le panneau tactile étant **caractérisé par** la seconde couche conductrice (142) qui comprend :
un premier film de nanotubes de carbone ; et
un second film de nanotubes de carbone empilé sur le premier film de nanotubes de carbone ;
dans lequel le premier film de nanotubes de carbone comprend une pluralité de premiers nanotubes de carbone, le second film de nanotubes de carbone comprend une pluralité de seconds nanotubes de carbone, la pluralité des premiers nanotubes de carbone sont aménagés dans la première direction et la pluralité de secondes nanotubes de carbone sont aménagés dans la seconde direction.

2. Panneau tactile (10) selon la revendication 1, dans lequel la structure de nanotubes de carbone de la première couche conductrice comprend une pluralité de nanotubes de carbone désordonnés entremêlés les uns aux autres et sont aménagés en mode isotrope.

3. Panneau tactile (10) selon la revendication 1, dans lequel la structure de nanotubes de carbone de la première couche conductrice comprend une pluralité de nanotubes de carbone ordonnés qui y sont distribués de manière uniforme et les nanotubes de carbone ordonnés sont principalement orientés dans une même direction ou dans plusieurs directions.

4. Panneau tactile (10) selon la revendication 1 ou 3, dans lequel la structure de nanotubes de carbone de la première couche conductrice comprend au moins un film de nanotubes de carbone, au moins un fil de nanotubes de carbone ou une combinaison de ceux-ci, le film de nanotubes de carbone ou le fil de nanotubes de carbone est tiré d'un réseau de nanotubes de carbone et le film de nanotubes de carbone ou le fil de nanotubes de carbone comprend en outre une pluralité de nanotubes de carbone successifs joints bout à bout par une force d'attraction de Van der Waals appliquée entre eux, et les nanotubes de carbone du film de nanotubes de carbone ou du fil de nanotubes de carbone sont principalement alignés dans une même direction.

5. Panneau tactile (10) selon la revendication 4, dans lequel la structure de nanotubes de carbone de la première couche conductrice comprend au moins deux couches des films de nanotubes de carbone empilées l'une sur l'autre.

6. Panneau tactile (10) selon l'une quelconque des revendications 4 ou 5, dans lequel l'épaisseur de chacun du premier film de nanotubes de carbone et du second film de nanotubes de carbone se situe dans une plage d'environ 0,5 nanomètre à environ 100 micromètres et le diamètre du fil de nanotubes de carbone se situe dans une plage d'environ 0,5 nanomètre à environ 100 micromètres.

7. Panneau tactile (10) selon l'une quelconque des revendications 1 à 6, dans lequel le pouvoir de transmission de la lumière de chacun(e) de la structure de nanotubes de carbone de la première couche conductrice, du premier film de nanotubes de carbone et du second film de nanotubes de carbone se situe dans la plage d'environ 70 % à environ 99 %.

8. Panneau tactile (10) selon l'une quelconque des revendications 1 à 7, dans lequel la résistance de chacun (e) de la structure de nanotubes de carbone de la première couche conductrice, du premier film de nanotubes de carbone et du second film de nanotubes de carbone se situe dans une plage d'environ 500 ohms par carré à environ 20 000 ohms par carré.

9. Panneau tactile (10) selon l'une quelconque des revendications 1 à 8, dans lequel la première direction est perpendiculaire à la seconde direction.

10. Panneau tactile (10) selon l'une quelconque des revendications 1 à 9, dans lequel la structure de nanotubes de carbone de la première couche conductrice comprend au moins deux films de nanotubes de carbone, les nanotubes de carbone de l'un des deux films de nanotubes de carbone sont orientés dans la première direction et les nanotubes de carbone de l'autre des deux films de nanotubes de carbone sont orientés dans la seconde direction.

11. Panneau tactile (10) selon l'une quelconque des revendications 1 à 10, dans lequel la structure de nanotubes de carbone de la première couche conductrice comprend une pluralité de fils de nanotubes de carbone et certains de la pluralité de fils de nanotubes de carbone sont alignés dans la première direction tandis que les autres de la pluralité de fils de nanotubes de carbone sont alignés dans la seconde direction.

12. Panneau tactile (10) selon l'une quelconque des revendications 1 à 11, comprenant en outre une couche isolante (18) située entre la première et la seconde plaque d'électrodes (12, 14) et la couche isolante (18) sépare la première plaque d'électrodes (12) de la seconde plaque d'électrodes (14).

13. Dispositif d'affichage (100) comprenant :
un panneau tactile (10) selon la revendication 1 ; et
un élément d'affichage (20) situé adjacent à la seconde plaque d'électrodes (14) du panneau tactile (10).

14. Dispositif d'affichage selon la revendication 13, dans lequel le panneau tactile (10) est espacé de l'élément d'affichage (20) d'une certaine distance ou le panneau tactile (10) est situé sur l'élément d'affichage (20).

15. Panneau tactile selon l'une quelconque des revendications 1 à 12, dans lequel la pluralité de premiers nanotubes de carbone sont parallèles à une surface du premier film de nanotubes de carbone, la pluralité de seconds nanotubes de carbone sont parallèles à une surface du second film de nanotubes de carbone, la pluralité de premiers nanotubes de carbone sont successifs et joints bout à bout par une force d'attraction de Van der Waals appliquée entre eux, la pluralité de seconds nanotubes de carbone sont successifs et joints bout à bout par une force d'attraction de Van der Waals appliquée entre eux.
